# EUROPEAN PATENT APPLICATION

(11) **EP 4 215 638 A1**
(43) Date of publication of application: **26.07.2023**
(21) Application number: 21915186.7
(22) Date of filing: 23.12.2021
(51) Int. Cl.: C23C 4/02, C23C 4/11, C23C 4/12, C23C 4/129, C23C 4/18, C23C 28/00

(54) **METHOD FOR IMPLEMENTING THERMAL BARRIER COATING AND HEAT-RESISTANT MEMBER**

(30) Priority: 28.12.2020 JP 2020218445
(71) Applicant: Mitsubishi Heavy Industries Aero Engines, Ltd., Komaki-shi, Aichi 485-0826, (JP)
(72) Inventor: OKAJIMA, Yoshifumi, Tokyo 100-8332 (JP); KAWASUMI, Sosuke, Tokyo 100-8332 (JP); TORIGOE, Taiji, Tokyo 100-8332 (JP); MIZUTANI, Koji, Komaki-shi, Aichi 485-0826 (JP); KINOUCHI, Arata, Komaki-shi, Aichi 485-0826 (JP)
(74) Representative: Hoffmann Eitle
(86) International application number: PCT/JP2021/047774
(87) International publication number: WO 2022/145326

(57) **Abstract**

A method for implementing thermal barrier coating according to at least one embodiment of the present disclosure comprises a step wherein a top coat layer is formed by means of thermal spray on a bond coat layer, which has been formed on a heat-resistant alloy base material, while jetting a gas from a plurality of pores that open to the surface of the heat-resistant alloy base material.

## Description

### TECHNICAL FIELD

The present disclosure relates to a method for applying a thermal barrier coating and a heat-resistant member. This application claims the priority of Japanese Patent Application No. 2020-218445 filed on December 28, 2020, the content of which is incorporated herein by reference.

### BACKGROUND

It is known that a thermal barrier coating (TBC) is provided on a heat-resistant member exposed to a high-temperature combustion gas, such as a combustor panel or a turbine blade in an aircraft engine, or a turbine blade or a ring segment in an industrial gas turbine. Such thermal barrier coating includes a bond coat layer formed on a heat-resistant alloy base material, and a top coat layer as a thermal barrier layer formed on the bond coat layer.

Further, in these heat-resistant members, for example, in order to perform film cooling, a plurality of cooling holes may be opened in the surfaces of the heat-resistant members. In the case of such heat-resistant member, it is necessary to prevent a material of the thermal barrier coating from entering the cooling holes and clogging the cooling holes in the process of forming the thermal barrier coating. Therefore, for example, by inserting a masking pin into each cooling hole in advance, it is possible to prevent the material of the thermal barrier coating from entering each cooling hole in the process of forming the thermal barrier coating (see, for example, Patent Document 1).

### Citation List

### Patent Literature

Patent Document 1: JP2016-108582A

### SUMMARY

### Technical Problem

For example, in the method described in Patent Document 1, the masking pin has to be removed from each cooling hole after the thermal barrier coating is formed. Therefore, the trouble of removing the masking pins increases, as the number of cooling holes in the heat-resistant member increases. Accordingly, it is desired to be able to prevent, by a simpler method, the cooling holes from being clogged in the process of forming the thermal barrier coating.

In view of the above, an object of at least one embodiment of the present disclosure is to suppress that the plurality of cooling holes opening in the surface of the heat-resistant member are clogged with the material of the thermal barrier coating.

### Solution to Problem

(1) A method for applying a thermal barrier coating according to at least one embodiment of the present disclosure includes: a step of forming a top coat layer on a bond coat layer, which is formed on a heat-resistant alloy base material, by thermal spraying, while ejecting a gas from a plurality of holes opened in a surface of the heat-resistant alloy base material.
(2) A heat-resistant member according to at least one embodiment of the present disclosure includes the top coat layer formed by the method for applying the thermal barrier coating according to the above method (1).

### Advantageous Effects

According to at least one embodiment of the present disclosure, it is possible to suppress that a plurality of cooling holes opening in a surface of a heat-resistant member are clogged with a material of a thermal barrier coating.

### BRIEF DESCRIPTION OF DRAWINGS

FIG. 1 is a schematic cross-sectional view of a heat-resistant member with a thermal barrier coating applied by a method for applying a thermal barrier coating according to some embodiments.
FIG. 2 is a view showing the appearance of a combustor panel for an aircraft engine as an example of the heat-resistant member.
FIG. 3 is a flowchart showing a procedure of the method for applying the thermal barrier coating according to some embodiments.
FIG. 4A is a view for describing an outline of a device related to the method for applying the thermal barrier coating according to some embodiments.
FIG. 4B is a view showing an example of a cooling method for maintaining a temperature of a top coat layer within the above-described temperature range.
FIG. 5 is a graph schematically showing a change in temperature of the top coat layer from the start of thermal spraying.
FIG. 6 is a graph showing a relationship between a thermal spraying temperature and a thermal conductivity of the top coat layer.
FIG. 7 is a graph showing a relationship between the thermal spraying temperature and a delamination limit temperature difference.
FIG. 8 is a graph showing a relationship between the delamination limit temperature difference and a length of a horizontal crack.
FIG. 9 is a graph showing a relationship between the thermal spraying temperature and a deposited film thickness per one pass of thermal spraying.
FIG. 10A is a table showing measurement results of the density of vertical cracks dispersed in the plane direction.
FIG. 10B is a table showing measurement results of a maximum length of the horizontal crack.
FIG. 11 is a view for describing an example about cooling of the heat-resistant member.
FIG. 12A is a view for describing an example about cooling of a plurality of heat-resistant members.
FIG. 12B is a view for describing another example about cooling of the plurality of heat-resistant members.
FIG. 13 is a view for describing an example about cooling of the heat-resistant member.
FIG. 14 is a view for describing an example about cooling of the heat-resistant member.
FIG. 15 is a schematic view for describing an application angle during thermal spraying with respect to a plurality of holes.
FIG. 16 is a graph showing experimental results regarding a relationship between a diameter of the hole and the clogging rate of the hole with a thermal spray material.

### DETAILED DESCRIPTION

Embodiments of the present disclosure will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

### (Regarding thermal barrier coating 3)

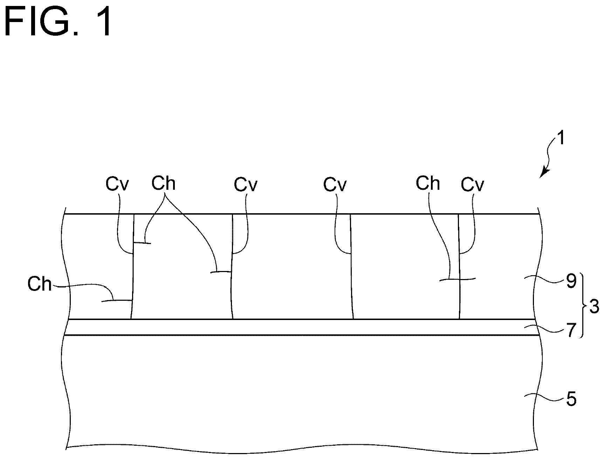

FIG. 1 is a schematic cross-sectional view of a heat-resistant member 1 with a thermal barrier coating 3 applied by a method for applying a thermal barrier coating according to some embodiments.

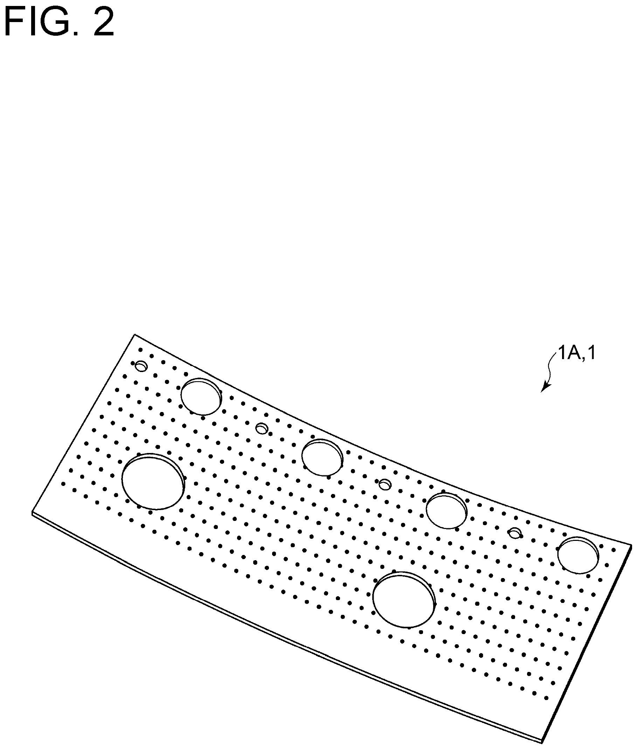

FIG. 2 is a view showing the appearance of a combustor panel 1A for an aircraft engine as an example of the heat-resistant member 1.

It is known that the thermal barrier coating (TBC) 3 for thermal barrier of the heat-resistant member 1 is formed on the heat-resistant member 1 such as the combustor panel 1A or a turbine blade for an aircraft engine, or a turbine blade or a ring segment for an industrial gas turbine.

A metal bond layer (bond coat layer) 7 and a top coat layer 9 as a thermal barrier layer are formed in this order on a heat-resistant alloy base material (base material) 5 of the heat-resistant member 1 according to some embodiments. That is, in some embodiments, the thermal barrier coating 3 includes the bond coat layer 7 and the top coat layer 9.

The bond coat layer 7 according to some embodiments is composed of, for example, McrAIY alloy (M indicates a metallic element such as Ni, Co, or Fe, or a combination of at least two of the above-described metallic elements).

The top coat layer 9 according to some embodiments is preferably composed of a ZrO₂-based material, such as YSZ (yttria-stabilized zirconia) which is ZrO₂ partially or fully stabilized with Y₂O₃. Further, the top coat layer 9 according to some embodiments may be composed of any of DySZ (dysprosia stabilized zirconia), ErSZ (erbia stabilized zirconia), Gd₂Zr₂O₇, or Gd₂Hf₂O₇.

Whereby, the thermal barrier coating 3 having excellent thermal barrier properties is obtained.

In the top coat layer 9 according to some embodiments, vertical cracks Cv extending in the thickness direction of the top coat layer 9 are dispersed in the plane direction, that is, in the horizontal direction and the depth direction of the drawing in FIG. 1. Further, in the top coat layer 9 according to some embodiments, horizontal cracks Ch extending in the plane direction are dispersed.

In the thermal barrier coating 3 according to some embodiments, the structure of the top coat layer 9 with the plurality of vertical cracks Cv can alleviate the occurrence of a thermal stress due to a difference in linear expansion coefficient from the heat-resistant alloy base material 5, obtaining excellent heat cycle durability.

### (Flowchart)

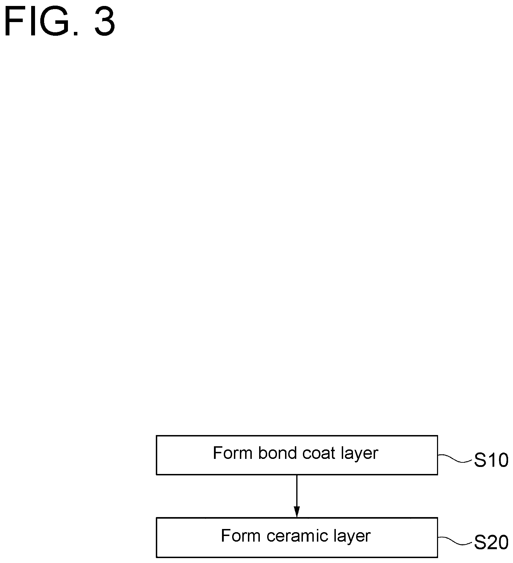

FIG. 3 is a flowchart showing a procedure of the method for applying the thermal barrier coating according to some embodiments. The method for applying the thermal barrier coating according to some embodiments includes a step S10 of forming the bond coat layer 7 and a step S20 of forming the top coat layer 9.

In some embodiments, the step S10 of forming the bond coat layer 7 is a step of forming the bond coat layer 7 on the heat-resistant alloy base material 5 by thermal spraying. In some embodiments, the step S10 of forming the bond coat layer 7 may be, for example, a step of forming the bond coat layer on the heat-resistant alloy base material 5 by high velocity oxygen fuel spraying (HVOF). In the following description, the step S10 of forming the bond coat layer 7 is a step of forming the bond coat layer 7 on the heat-resistant alloy base material 5 by high velocity flame spraying.

That is, in some embodiments, the step S10 of forming the bond coat layer 7 includes thermal-spraying powder such as a MCrAlY alloy as a thermal spray material onto the surface of the heat-resistant alloy base material 5 by high velocity flame spraying.

In some embodiments, the surface roughness of the bond coat layer 7 is preferably not less than 8 µm in terms of arithmetic mean roughness Ra in order to enhance adhesion to the top coat layer 9.

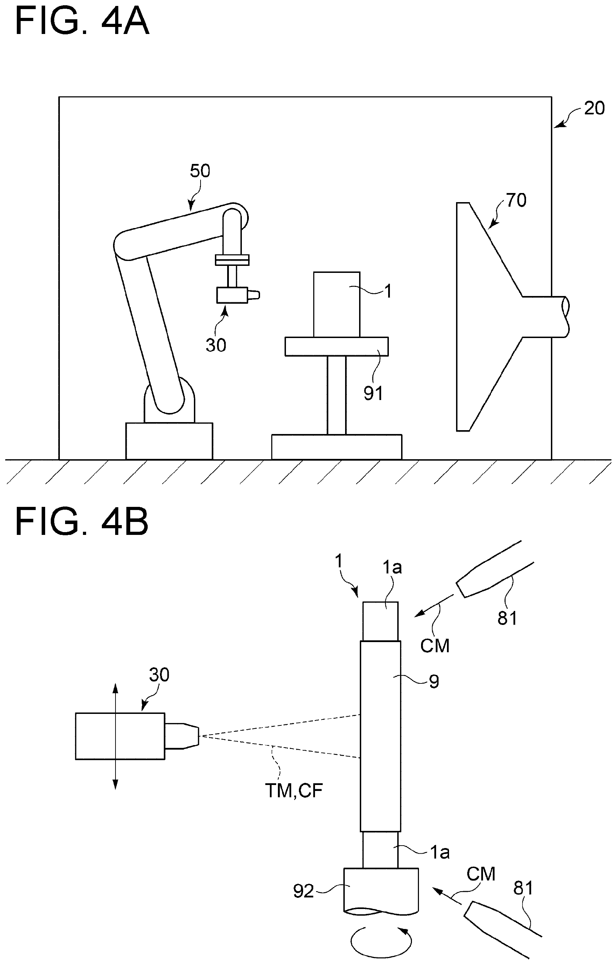

In some embodiments, the step S20 of forming the top coat layer 9 is a step of forming the top coat layer 9 on the bond coat layer 7 formed on the heat-resistant alloy base material 5 of the heat-resistant member 1 that is the object. In some embodiments, the step S20 of forming the top coat layer 9 includes forming the top coat layer by thermal-spraying a suspension containing ceramic powder by high velocity flame spraying. That is, in some embodiments, the thermal spraying performed in the step S20 of forming the top coat layer 9 is suspension high velocity oxygen fuel spraying (S-HVOF). In some embodiments, the step S20 of forming the top coat layer 9 includes thermal-spraying a suspension, which is obtained by dispersing ceramic powder as the thermal spray material in a solvent, onto the surface of the bond coat layer 7 by high velocity flame spraying. In suspension high velocity flame spraying, a thermal spray material TM supplied as the suspension is sprayed onto the surface of the object to be thermal-sprayed by a combustion flame jet flow CF (see FIG. 4B described later).

Thermal spraying conditions in the step S20 of forming the top coat layer 9 will be described later in detail.

FIG. 4A is a view for describing an outline of a device related to the method for applying the thermal barrier coating according to some embodiments.

As shown in FIG. 4A, the method for applying the thermal barrier coating according to some embodiments includes applying the thermal barrier coating 3 by using a thermal spray gun 30, a moving device 50 for the thermal spray gun 30, and a dust collection hood 70. In the method for applying the thermal barrier coating according to some embodiments, in addition to these devices shown in FIG. 4A, although not shown, a thermal spray control panel, a controller for controlling driving of the moving device 50, a thermal spray material supply device, or the like is also included in the device configuration.

In the application of the thermal barrier coating 3, a fixing jig 91 may be used if it is necessary to fix the heat-resistant member 1 which is the object to be applied with the thermal barrier coating 3, and a rotation driving device (not shown) may be used if it is necessary to continuously rotate the heat-resistant member 1.

The moving device 50 according to some embodiments is, for example, an industrial robot, but may be, for example, a scanning device, such as an NC device, having a slide shaft movable in multiple directions.

As shown in FIG. 4A, in the method for applying the thermal barrier coating according to some embodiments, for example, the thermal spray gun 30, the moving device 50, and the dust collection hood 70 are disposed in one thermal spray booth 20. The thermal spray booth 20 forms a space partitioned off from surroundings for sound insulation or prevention of dust scattering to the surroundings. For example, the thermal spray booth 20 may be a box disposed in a working room, may be a section in which a part of the working room is partitioned by a wall or the like, or may be a dedicated room provided in a building.

The heat-resistant member 1, which is the object to be applied with the thermal barrier coating 3, is formed with the thermal barrier coating 3 in the thermal spray booth 20.

As described above, in the method for applying the thermal barrier coating according to some embodiments, the step S10 of forming the bond coat layer 7 includes performing thermal spraying by high velocity oxygen fuel spraying (HVOF), and the step S20 of forming the top coat layer 9 includes performing thermal spraying by suspension high velocity oxygen fuel spraying (S-HVOF). Thus, in the method for applying the thermal barrier coating according to some embodiments, for example, the thermal spray gun 30 and the thermal spray material supply device are changed between the step S10 of forming the bond coat layer 7 and the step S20 of forming the top coat layer 9, making it possible to perform the step S10 of forming the bond coat layer 7 and the step S20 of forming the top coat layer 9 in the same thermal spray booth 20.

In the method for applying the thermal barrier coating according to some embodiments, when the step S20 of forming the top coat layer 9 is performed after the step S10 of forming the bond coat layer 7, the heat-resistant member 1 need not be moved to a thermal spray booth different from the thermal spray booth 20 in which the step S10 of forming the bond coat layer 7 is performed. Thus, it is possible to save the trouble of moving the heat-resistant member 1 to the different thermal spray booth, or the trouble of, for example, setting the heat-resistant member 1 until the start of thermal spraying after the heat-resistant member 1 is moved.

### (Regarding application condition in step S20 of forming top coat layer 9)

Conventionally, in order to ensure heat cycle durability, the top coat layer may be formed by electron beam physical vapor deposition (EB-PVD) so as to internally include a crack which is called a vertical crack extending in the thickness direction of the top coat layer.

However, an initial cost of a device for performing electron beam physical vapor deposition is more than ten times as high as that of a thermal spraying device or the like. Further, a running cost for forming a layer by electron beam physical vapor deposition is about ten times as high as a running cost for forming a layer by thermal spraying or the like. Furthermore, a speed of layer formation by electron beam physical vapor deposition is as low as a fraction of a speed of layer formation by thermal spraying or the like. Therefore, there is a demand for a method for forming the top coat layer of the thermal barrier coating at a lower cost, while ensuring performance such as thermal barrier properties or heat cycle durability as the top coat layer.

As a result of intensive studies by the present inventors, it was found that the performance such as thermal barrier properties or thermal cycle durability equivalent to that in the case of forming the top coat layer on the bond coat layer by electron beam physical vapor deposition can be ensured by thermal-spraying the suspension containing ceramic powder by high velocity flame spraying, while maintaining the temperature of the top coat layer 9 at not lower than 300°C and not higher than 450°C in the step S20 of forming the top coat layer 9.

Therefore, in the method for applying the thermal barrier coating according to some embodiments, in the step S20 of forming the top coat layer 9, the top coat layer 9 is formed by thermal-spraying the suspension containing ceramic powder by high velocity flame spraying, while maintaining the temperature of the top coat layer 9 at not lower than 300°C and not higher than 450°C.

The inventors' study results will be described later.

Consequently, the top coat layer 9 can be formed at a lower running cost and in a shorter time than in the case where the top coat layer 9 is formed on the bond coat layer 7 by electron beam physical vapor deposition. Further, if the top coat layer 9 is formed by suspension high velocity flame spraying, it is also possible to greatly reduce an introduction cost of equipment for forming the top coat layer 9.

Further, the heat-resistant member 1 according to some embodiments includes the top coat layer 9 formed by the method for applying the thermal barrier coating according to some embodiments.

Thus, it is possible to suppress the manufacturing cost of the heat-resistant member 1.

The step S20 of forming the top coat layer 9 more preferably includes forming the top coat layer 9 by thermal-spraying the suspension containing ceramic powder by high velocity flame spraying, while maintaining the temperature of the top coat layer 9 at not lower than 300°C and not higher than 400°C.

Whereby, the performance such as thermal barrier properties or thermal cycle durability in the thermal barrier coating is further improved.

Whether the temperature of the top coat layer 9 is maintained within the above-described temperature range may be confirmed by measurement using a non-contact thermometer such as a thermoviewer for detecting a temperature with infrared rays.

Further, the top coat layer 9 may be cooled as appropriate such that the temperature thereof is maintained within the above-described temperature range.

That is, in the method for applying the thermal barrier coating according to some embodiments, the step S20 of forming the top coat layer 9 preferably includes controlling the temperature of the top coat layer 9 by cooling with a cooling medium.

Consequently, the temperature of the top coat layer 9 can easily be controlled within the above-described temperature range, stabilizing the performance such as thermal barrier properties or thermal cycle durability in the thermal barrier coating 3.

FIG. 4B is a view showing an example of a cooling method for maintaining the temperature of the top coat layer 9 within the above-described temperature range.

In the example shown in FIG. 4B, the heat-resistant member 1 is a shaft-like member. In the example shown in FIG. 4B, the heat-resistant member 1 is formed with the top coat layer 9 while being rotated by the rotation driving device (not shown) for continuously rotating the heat-resistant member 1. In the example shown in FIG. 4B, the heat-resistant member 1 is held by a holding portion 92 of the rotation driving device (not shown) and rotates together with the holding portion 92.

In the example shown in FIG. 4B, the heat-resistant member 1 is cooled by a cooling medium CM blown out from a cooling nozzle 81, for example. In the example shown in FIG. 4B, in order to suppress that the combustion flame jet flow CF is influenced by the cooling medium CM blown out from the cooling nozzle 81, the cooling medium CM is preferably blown out not toward the surface of the top coat layer 9, but toward a region 1a of the heat-resistant member 1 where the top coat layer 9 is not formed or the holding portion 92 for holding the heat-resistant member 1.

Examples other than the example shown in FIG. 4B, the type of cooling medium CM, or the like regarding cooling of the heat-resistant member 1 will be described later.

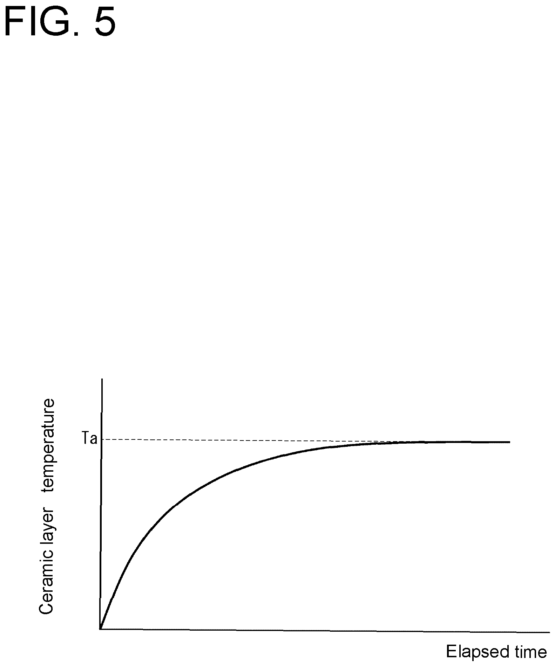

FIG. 5 is a graph schematically showing a change in temperature of the top coat layer 9 from the start of thermal spraying. The temperature of the top coat layer 9 rises as time elapses from the start of thermal spraying for forming the top coat layer 9. As in the example shown in FIG. 4B, the temperature of the top coat layer 9 during thermal spraying can stably be maintained within the above-described temperature range by cooling with the cooling medium CM.

That is, in the method for applying the thermal barrier coating according to some embodiments, in the step S20 of forming the top coat layer 9, an average value of temperatures in the stable state after the temperature of the top coat layer 9 rises after the start of thermal spraying is preferably maintained within the above-described temperature range.

In the following description, the average value is also referred to as a thermal spraying temperature Ta.

In the method for applying the thermal barrier coating according to some embodiments, it is not necessary to preheat the heat-resistant member 1 formed with the bond coat layer 7, before thermal spraying for forming the top coat layer 9 is started.

Hereinafter, the inventors' study results will be described.

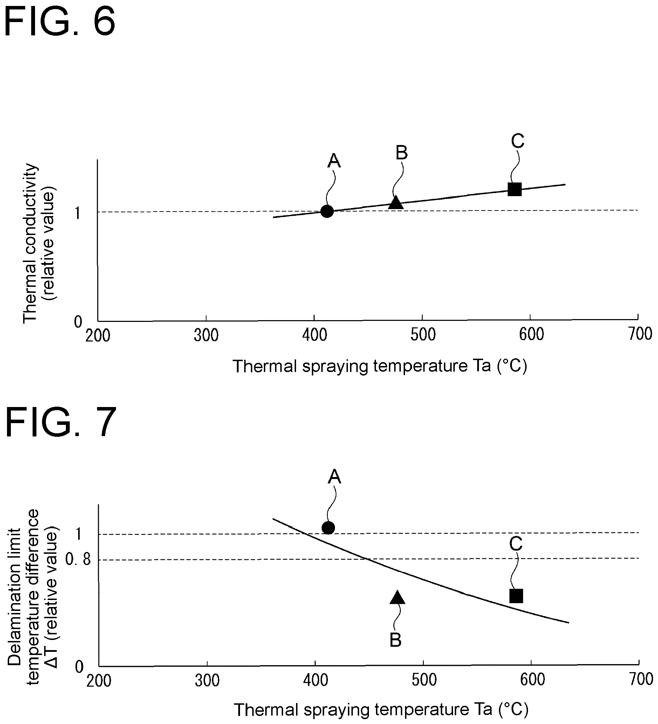

FIG. 6 is a graph showing a relationship between the thermal spraying temperature Ta and a thermal conductivity (relative value) of top coat layer 9 for a test piece A whose thermal spraying temperature Ta is 413°C, a test piece B whose thermal spraying temperature Ta is 477°C, and a test piece C whose thermal spraying temperature Ta is 586°C.

FIG. 7 is a graph showing a relationship between the thermal spraying temperature Ta and a delamination limit temperature difference ΔT (relative value) for the test piece A, the test piece B, and the test piece C.

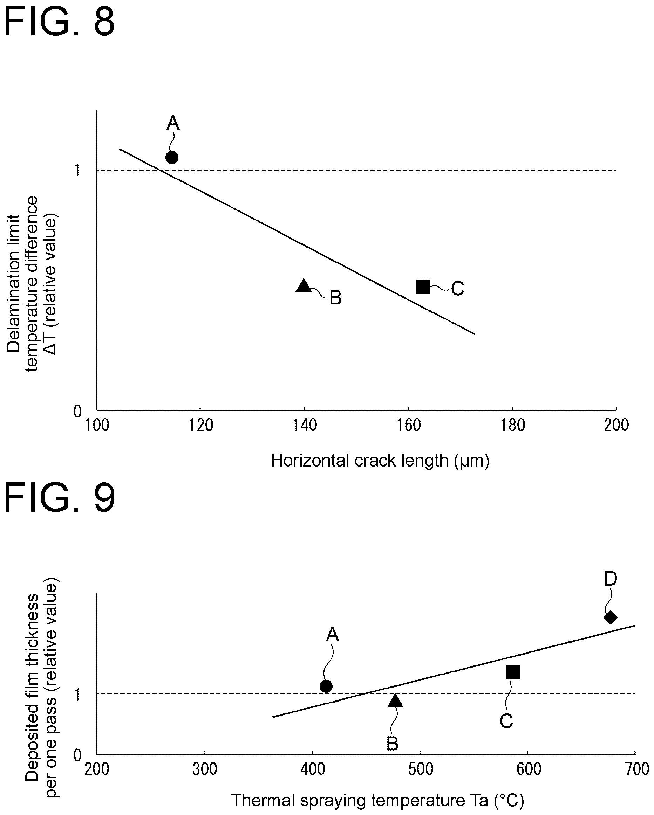

FIG. 8 is a graph showing a relationship between the delamination limit temperature difference ΔT (relative value) and a length of the horizontal crack Ch (horizontal crack length) for the test piece A, the test piece B, and the test piece C.

FIG. 9 is a graph showing a relationship between the thermal spraying temperature Ta and a deposited film thickness (relative value) per one pass of thermal spraying for the test piece A, the test piece B, the test piece C, and a test piece D whose thermal spraying temperature Ta is 678°C.

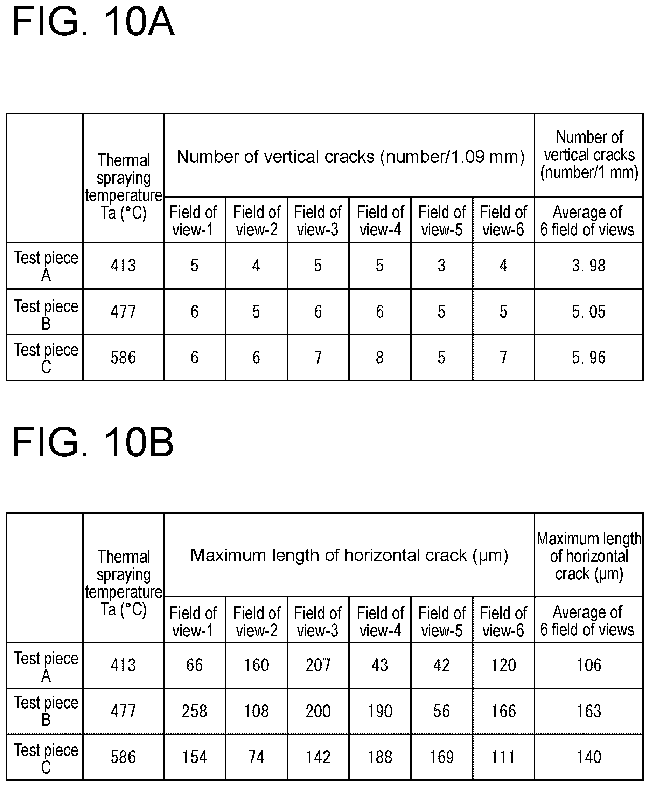

FIG. 10A is a table showing measurement results of the density of the vertical cracks Cv dispersed in the plane direction for the test piece A, the test piece B, and the test piece C.

FIG. 10B is a table showing measurement results of a maximum length of the horizontal crack Ch for the test piece A, the test piece B, and the test piece C.

In FIG. 6, the thermal conductivity of the top coat layer 9 is represented as the relative value with the thermal conductivity of the top coat layer formed by electron beam physical vapor deposition (EB-PVD) being 1.

Likewise, in FIGs. 7 and 8, the delamination limit temperature difference ΔT of the top coat layer 9 is represented as the relative value with the delamination limit temperature difference ΔT of the top coat layer formed by electron beam physical vapor deposition being 1. The delamination limit temperature difference ΔT in FIGs. 7 and 8 is a temperature difference where the thermal barrier coating 3 is estimated to be delaminated when a test for giving this temperature difference ΔT is repeated 1,000 cycles.

In FIG. 9, the deposited film thickness of the top coat layer 9 per one pass is represented as the relative value with the deposited film thickness per one pass when the thermal spraying temperature Ta is 450°C being 1.

In acquiring each data shown in FIGs. 10A and 10B, each data was acquired by observing a micrograph of a cut surface of each test piece cut along the thickness direction of the top coat layer 9. Further, in FIGs. 10A and 10B, each data was acquired at six locations (six fields of view) in which the observed parts (fields of view) on the cut surface were changed.

In acquiring each data shown in FIGs. 10A and 10B, the size of the field of view corresponding to the horizontal direction in FIG. 1 was 1.09 mm in each micrograph, and thus the number of vertical cracks Cv observed in this field of view and the maximum length of the horizontal crack Ch were obtained.

The thermal spraying conditions other than the thermal spraying temperature Ta for the test piece A, the test piece B, the test piece C, and the test piece D are as follows.

The test pieces A to D are cylindrical test pieces as shown in FIG. 4B, and the top coat layer 9 was formed by suspension high velocity flame spraying on the bond coat layer 7 formed on the outer circumferential portions of the test pieces A to D.

The traverse speed of the thermal spray gun 30 is 100 mm/sec. The film thickness of the top coat layer 9 is 0.5 mm. The rotation speed of the cylindrical test piece is 1,200 rpm.

In thermal-spraying the test piece, the thermal spray gun 30 forms a film while moving from a film formation start position on one side in the vertical direction of FIG. 4B to another side. After the thermal spray gun 30 reaches a film formation end position on the another side, the thermal spray gun 30 is moved in the depth direction of the drawing in FIG. 4B, evacuated so that the combustion flame jet flow CF does not hit the test piece, and then moved toward the one side in the vertical direction in FIG. 4B. Then, the thermal spray gun 30 is moved in the depth direction of the drawing in FIG. 4B and returned to the film formation start position, and thereafter, the top coat layer 9 is formed by repeating the above-described operations.

As shown in FIG. 6, by setting the thermal spraying temperature Ta at not higher than 450°C, the thermal conductivity of the top coat layer 9 can be set equal to or lower than that in the case of forming the top coat layer 9 by electron beam physical vapor deposition.

As shown in FIG. 6, by setting the thermal spraying temperature Ta at not higher than 400°C, it is possible to further decrease the thermal conductivity of the top coat layer 9.

As shown in FIG. 7, by setting the thermal spraying temperature Ta at not higher than 400°C, the delamination limit temperature difference ΔT of the top coat layer 9 can be set equal to or lower than that in the case of forming the top coat layer 9 by electron beam physical vapor deposition.

Since the delamination limit temperature difference ΔT of the top coat layer 9 may be about 0.8 as the relative value in FIG. 7, by setting the thermal spraying temperature Ta at not higher than 450°C, the delamination limit temperature difference ΔT of the top coat layer 9 can be set equal to or greater than a required temperature difference.

Therefore, the thermal spraying temperature Ta is preferably not higher than 450°C, and is more preferably not higher than 400°C.

As shown in FIGs. 8 and 10B, it can be seen that the length of the horizontal crack Ch tends to increase as the thermal spraying temperature Ta increases. It can also be seen that the delamination limit temperature difference ΔT of the top coat layer 9 tends to decrease as the length of the horizontal crack Ch increases. The length of the horizontal crack Ch is desirably small, because growth of the horizontal crack Ch causes delamination of the top coat layer 9 and the thermal cycle durability is decreased. Each plot shown in FIG. 8 is based on the data shown in FIG. 10B.

As shown in FIG. 10A, the density of the vertical cracks Cv dispersed in the plane direction increases as the thermal spraying temperature Ta increases. Although the density of the vertical cracks Cv dispersed in the plane direction increases as the thermal cycle durability increases, the length of the horizontal crack Ch tends to increase as the density of the vertical cracks Cv dispersed in the plane direction is to be increased. Therefore, the density of the vertical cracks Cv dispersed in the plane direction can be about 4 cracks/mm.

As shown in FIG. 9, the deposited film thickness per one pass of thermal spraying decreases as the thermal spraying temperature Ta decreases. Thus, the productivity of the top coat layer 9 decreases as the thermal spraying temperature Ta decreases.

As shown in FIG. 9, if the thermal spraying temperature Ta falls below 300°C, the deposited film thickness per one pass of thermal spraying is half or less compared to the case where the thermal spraying temperature Ta is 450°C.

Therefore, the thermal spraying temperature Ta is desirably not lower than 300°C.

### (Regarding cooling of heat-resistant member 1)

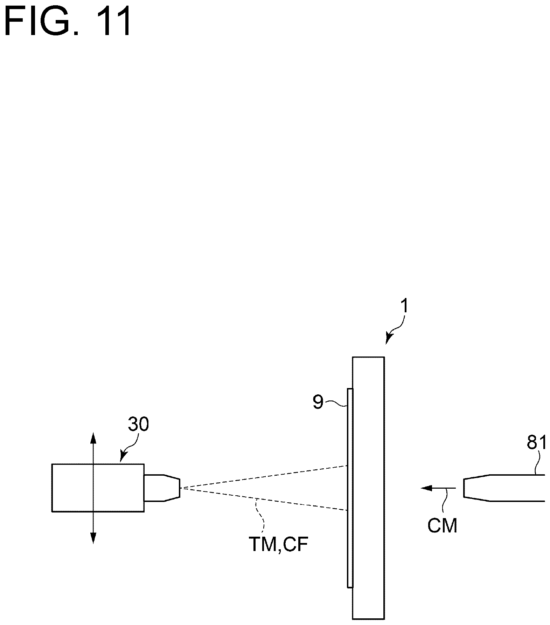

FIG. 11 is a view for describing an example about cooling of the heat-resistant member 1.

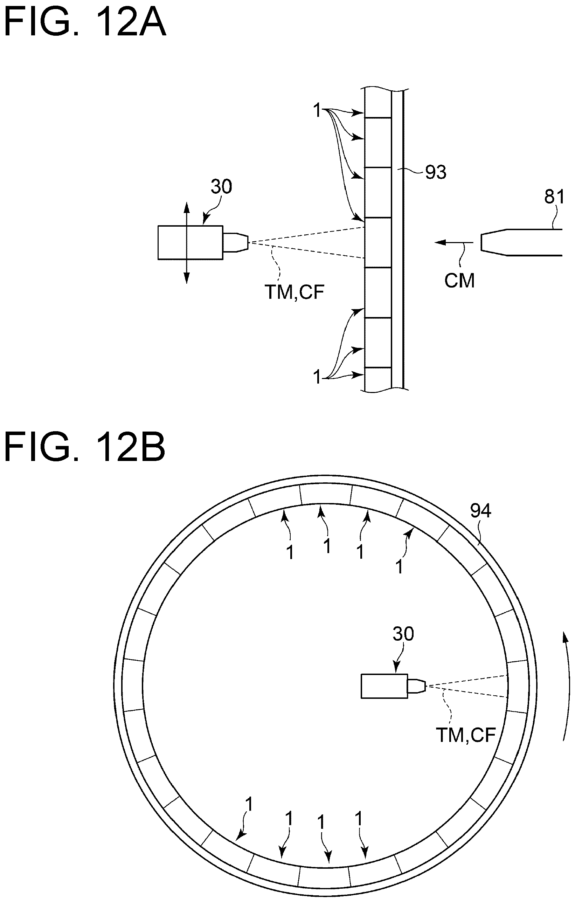

FIG. 12A is a view for describing an example about cooling of a plurality of heat-resistant members 1.

FIG. 12B is a view for describing another example about cooling of the plurality of heat-resistant members 1.

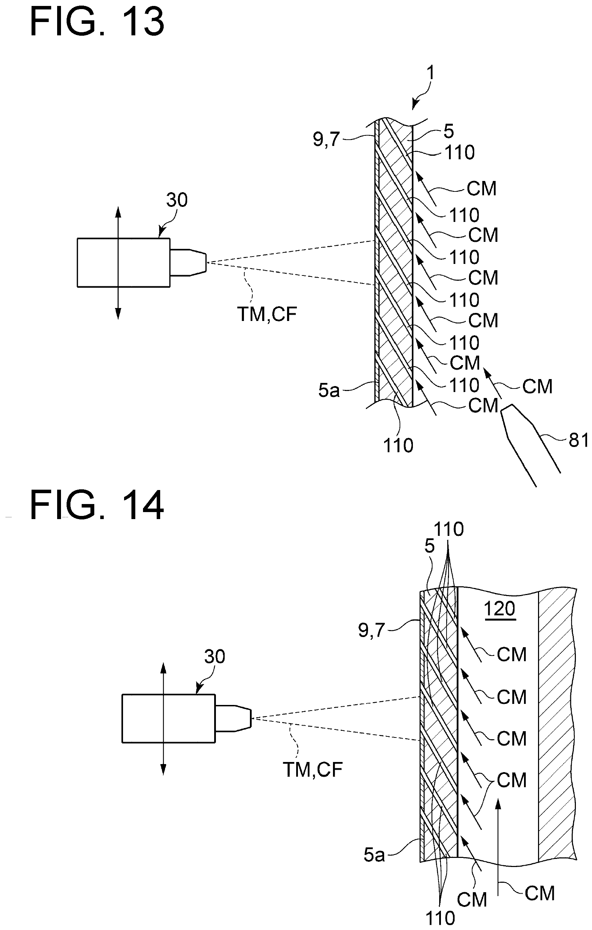

FIG. 13 is a view for describing an example about cooling of the heat-resistant member 1.

FIG. 14 is a view for describing an example about cooling of the heat-resistant member 1.

As shown in FIG. 11, for example, if the top coat layer 9 is formed on one surface of the plate-shaped heat-resistant member 1, the heat-resistant member 1 may be cooled by blowing out the cooling medium CM toward another surface opposite to the one surface.

As shown in FIGs. 12A and 12B, the step S20 of forming the top coat layer 9 may include forming the top coat layer 9 by sequentially thermal-spraying the plurality of heat-resistant members 1 attached to a jig 93, 94.

Whereby, the top coat layer 9 can efficiently be formed with respect to the plurality of heat-resistant members 1.

That is, as shown in FIG. 12A, the plurality of heat-resistant members 1 may be arranged side by side, and the plurality of heat-resistant members 1 may be thermal-sprayed in one pass of thermal spraying. In this case, the plurality of heat-resistant members 1 arranged side by side in a line or in a plane may be held by the jig 93, for example.

As shown in FIG. 12A, each of the heat-resistant members 1 arranged side by side may be cooled by blowing out the cooling medium CM toward a surface opposite to a surface formed with the top coat layer 9 in each of the plurality of heat-resistant members 1.

As shown in FIG. 12A, if the plurality of heat-resistant members 1 are arranged side by side and the plurality of heat-resistant members 1 are thermal-sprayed in one pass of thermal spraying, an application interval between the pass and a next pass of thermal spraying increases compared to a case where the one heat-resistant member 1 is thermal-sprayed, making it difficult to increase the temperature of the top coat layer 9. Therefore, cooling with the cooling medium CM is not essential, as long as the thermal spraying temperature Ta can be maintained within the above-described temperature range without cooling each of the heat-resistant members 1 by blowing out the cooling medium CM.

As shown in FIG. 12B, the plurality of heat-resistant members 1 annularly arranged side by side may be thermal-sprayed by relatively rotating the plurality of heat-resistant members 1 and the thermal spray gun 30. In this case, the plurality of heat-resistant members 1 annularly arranged side by side may be held by the jig 94, for example. That is, it is preferable that the jig 94 can hold the plurality of heat-resistant members 1 annularly arranged. Then, the step S20 of forming the top coat layer 9 preferably includes sequentially thermal-spraying the plurality of heat-resistant members 1 held by the jig 94, while relatively rotating the plurality of heat-resistant members 1 and the thermal spray gun 30.

The plurality of heat-resistant members 1 annularly arranged side by side may be fixed and thermal-sprayed by rotating the thermal spray gun 30, or the thermal spray gun 30 may be fixed and the plurality of heat-resistant members 1 annularly arranged side by side may be thermal-sprayed by rotating the plurality of heat-resistant members 1.

If the plurality of heat-resistant members 1 are rotated, a difference in speed occurs between each heat-resistant member 1 and surrounding air, obtaining the same cooling effect as the case where air is blown to each heat-resistant member 1 and making it possible to efficiently cool each heat-resistant member 1.

For example, as shown in FIGs. 13 and 14, if the heat-resistant member 1 has a plurality of holes 110 opened in the surface of the heat-resistant alloy base material 5, such as so-called film cooling holes, the top coat layer 9 may be formed while ejecting a gas (cooling medium CM) from the plurality of holes 110.

Consequently, the thermal spraying temperature Ta can easily be controlled within the above-described temperature range, stabilizing the performance such as thermal barrier properties or thermal cycle durability in the thermal barrier coating 3.

For example, as in the combustor panel 1A shown in FIG. 2, if the plurality of holes are disposed which communicate with one surface and another surface of the combustor panel 1A, for example, as shown in FIG. 13, the gas may be ejected from the plurality of holes 110 by injecting the gas to the surface opposite to the surface formed with the top coat layer 9.

Further, in a case where the plurality of holes 110 communicate with an internal passage 120 of the heat-resistant member 1 (see FIG. 14), for example, as in a case where the plurality of holes 110 communicate with an internal cooling passage of a blade of the turbine blade in the turbine blade, the gas (cooling medium CM) may be ejected from the plurality of holes 110 by supplying the gas to the passage 120 communicating with the plurality of holes 110.

### (Regarding cooling medium CM)

In some embodiments, the cooling medium CM may be compressed air compressed by a compressor.

With the compressed air compressed by the compressor, the cooling medium CM is easily secured and an increase in cost for cooling can be suppressed.

The compressed air serving as the cooling medium CM may be compressed air compressed by a compressor for generating compressed air for power in a factory, or may be compressed air compressed by a compressor installed to cool the heat-resistant member 1.

Further, in some embodiments, the cooling medium CM may include dry ice.

That is, the cooling medium CM may be configured such that dry ice grains or powder having a relatively small grain diameter is conveyed by the compressed air, or the cooling medium CM may be carbon dioxide which is obtained by vaporizing dry ice and has a relatively low temperature.

Consequently, the temperature of the top coat layer 9 is less likely to rise excessively during the formation of the top coat layer 9, stabilizing the performance such as thermal barrier properties or thermal cycle durability in the thermal barrier coating 3.

### (Regarding suppression of clogging of plurality of holes 110 opened in surface of heat-resistant alloy base material 5)

As described above, in the heat-resistant member 1 according to some embodiments, for example, in order to perform film cooling, the plurality of holes 110 (hereinafter, also referred to as the cooling holes 110) may be opened in the surface of the heat-resistant member 1. In the case of such heat-resistant member 1, it is necessary to prevent the material (thermal spray material) of the thermal barrier coating from entering the cooling holes 110 and clogging the cooling holes 110 in the process of forming the thermal barrier coating. Therefore, for example, by inserting a masking pin into each cooling hole 110 in advance, it is possible to prevent the material of the thermal barrier coating from entering each cooling hole 110 in the process of forming the thermal barrier coating.

However, if the masking pin is used, the masking pin has to be removed from each cooling hole 110 after the thermal barrier coating is formed. Therefore, the trouble of removing the masking pins increases, as the number of cooling holes 110 in the heat-resistant member 1 increases. Accordingly, it is desired to be able to prevent, by a simpler method, the cooling holes 110 from being clogged in the process of forming the thermal barrier coating.

Therefore, in the method for applying the thermal barrier coating according to some embodiments, for example, the step S10 of forming the bond coat layer 7 preferably includes forming the bond coat layer 7 on the heat-resistant alloy base material 5 by thermal spraying, while ejecting the gas from the plurality of holes 110 opened in the surface of the heat-resistant alloy base material 5. That is, in the method for applying the thermal barrier coating according to some embodiments, for example, the step S10 of forming the bond coat layer 7 may be a step of forming the bond coat layer 7 on the heat-resistant alloy base material 5 by thermal spraying, while ejecting the gas from the plurality of holes 110.

By thus forming the bond coat layer 7 while ejecting the gas from the plurality of holes 110, the entry of the material (thermal spray material) of the bond coat layer 7 into the plurality of holes 110 is suppressed. Thus, in the step S10 of forming the bond coat layer 7, it is possible to suppress the clogging of the plurality of holes 110 with the material of the bond coat layer 7.

As described above, for example, the step S10 of forming the bond coat layer 7 preferably includes forming the bond coat layer 7 on the heat-resistant alloy base material 5 by high velocity flame spraying, while ejecting the gas from the plurality of holes 110.

Thus, the bond coat layer 7 can be formed by high velocity flame spraying, while suppressing the clogging of the plurality of holes 110 with the material of the bond coat layer 7.

Further, in the method for applying the thermal barrier coating according to some embodiments, for example, the step S20 of forming the top coat layer 9 preferably includes forming the top coat layer 9 on the bond coat layer 7, which is formed on the heat-resistant alloy base material 5, by thermal spraying, while ejecting the gas from the plurality of holes 110 opened in the surface of the heat-resistant alloy base material 5. That is, in the method for applying the thermal barrier coating according to some embodiments, for example, the step S20 of forming the top coat layer 9 may be a step of forming the top coat layer 9 on the bond coat layer 7, which is formed on the heat-resistant alloy base material 5, by thermal spraying, while ejecting the gas from the plurality of holes 110.

By thus forming the top coat layer 9 while ejecting the gas from the plurality of holes 110, the entry of the material (thermal spray material, that is, ceramic powder) of the top coat layer 9 into the plurality of holes 110 is suppressed. Thus, in the step S20 of forming the top coat layer 9, it is possible to suppress the clogging of the plurality of holes 110 with the material of the top coat layer 9.

Further, in the step S20 of forming the top coat layer 9, in case the above-described disadvantage may be caused due to the excessive increase in temperature of the top coat layer 9 by thermal spraying, it is possible to suppress the excessive increase in temperature of the top coat layer 9 by ejecting the gas from the plurality of holes 110.

As described above, for example, the step S20 of forming the top coat layer 9 preferably includes forming the top coat layer 9 by thermal-spraying the suspension containing ceramic powder by high velocity flame spraying, while ejecting the gas from the plurality of holes 110.

Consequently, the top coat layer 9 can be formed at a lower running cost and in a shorter time than in the case where the top coat layer 9 is formed on the bond coat layer 7 by electron beam physical vapor deposition. Further, if the top coat layer 9 is formed by suspension high velocity flame spraying, it is also possible to greatly reduce an introduction cost of equipment for forming the top coat layer 9.

As described above, for example, as in the combustor panel 1A shown in FIG. 2, if the plurality of holes are disposed which communicate with one surface and another surface of the combustor panel 1A, for example, as shown in FIG. 13, the gas is preferably ejected from the plurality of holes 110 by injecting the gas to the surface opposite to the surface formed with the top coat layer 9. Thus, it is possible to easily eject the gas from the plurality of holes.

Further, as shown in FIG. 14, in the case where the plurality of holes 110 communicate with the internal passage 120 of the heat-resistant member 1, as described above, the gas (cooling medium CM) may be ejected from the plurality of holes 110 by supplying the gas to the passage 120 communicating with the plurality of holes 110. By supplying the gas to the passage 120, it is possible to easily eject the gas from the plurality of holes 110.

Suppressing the clogging of the cooling holes 110 with the thermal spray material by ejecting the gas from the plurality of holes in the process of forming the thermal barrier coating as described above is effective regardless of the method of thermal spraying. That is, it is effective in, for example, atmospheric plasma spraying (APS), high velocity oxygen fuel spraying (HVOF), suspension atmospheric plasma spraying (S-APS), suspension high velocity oxygen fuel spraying (S-HVOF), and the like.

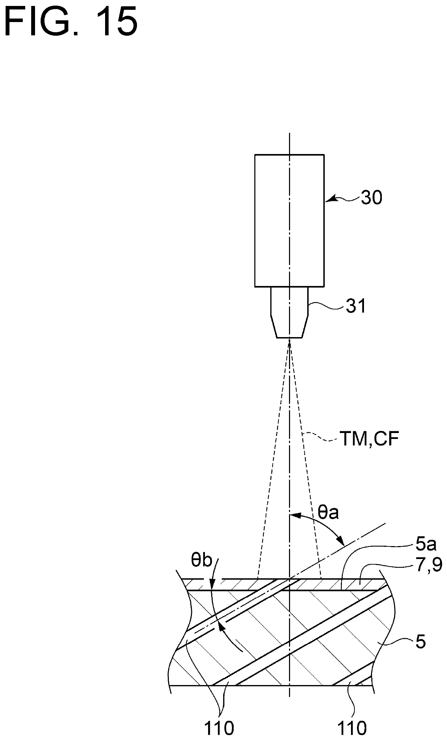

FIG. 15 is a schematic view for describing an application angle during thermal spraying with respect to the plurality of holes 110.

In some embodiments, an application angle θa during thermal spraying with respect to the hole 110 is an angular difference between an extension direction of the hole 110 and an injection direction of the thermal spray material (an extension direction of the nozzle 31 of the thermal spray gun 30).

In some embodiments, an inclination angle θb of the hole 110 is an angular difference between the extension direction of the hole 110 and an extension direction of a surface 5a of the heat-resistant alloy base material 5.

The hole 110 is clogged with the thermal spray material when the application angle θa is around 90 degrees, and it tends to be unlikely that the hole 110 is clogged as the application angle θa gradually decreases from 90 degrees and approaches 0 degrees.

Further, for example, in atmospheric plasma spraying (APS), a high-temperature plasma jet is used to melt the thermal spray material and adhere the melted thermal spray material to the base material. By contrast, for example, in high velocity oxygen fuel spraying (HVOF) or suspension high velocity oxygen fuel spraying (S-HVOF), the thermal spray material is caused to collide with the base material at supersonic speed and be adhered to the base material. Thus, as the application angle θa gradually decreases from 90 degrees, it tends to be unlikely that the hole 110 is clogged in, for example, high velocity oxygen fuel spraying (HVOF) or suspension high velocity oxygen fuel spraying (S-HVOF) relative to, for example, atmospheric plasma spraying (APS).

In the method for applying the thermal barrier coating according to some embodiments, in the step S20 of forming the top coat layer 9, thermal spraying is preferably performed by setting the angular difference between the extension direction of the hole and the injection direction of the thermal spray material, that is, the application angle θa at not less than 0 degrees and not greater than 80 degrees.

As a result of intensive studies by the present inventors, it was found that in order to suppress the clogging of the hole 110 with the material of the top coat layer 9, thermal spraying is more preferably performed by setting the application angle θa at not less than 0 degrees and not greater than 80 degrees.

Therefore, in the method for applying the thermal barrier coating according to some embodiments, performing thermal spraying by setting the application angle θa at not less than 0 degrees and not greater than 80 degrees can effectively suppress the clogging of the hole 110 with the material of the top coat layer.

In the method for applying the thermal barrier coating according to some embodiments, the diameter of the hole 110 is preferably greater than 0.5 mm (for example, not less than 0.533 mm).

As a result of intensive studies by the present inventors, it was found that in order to suppress the clogging of the hole 110 with the material of the top coat layer 9, the diameter of the hole 110 is more preferably greater than 0.5 mm (for example, not less than 0.533 mm).

Therefore, in the method for applying the thermal barrier coating according to some embodiments, performing thermal spraying by setting such that the diameter of the hole 110 is greater than 0.5 mm (for example, not less than 0.533 mm) can effectively suppress the clogging of the hole 110 with the material of the top coat layer 9.

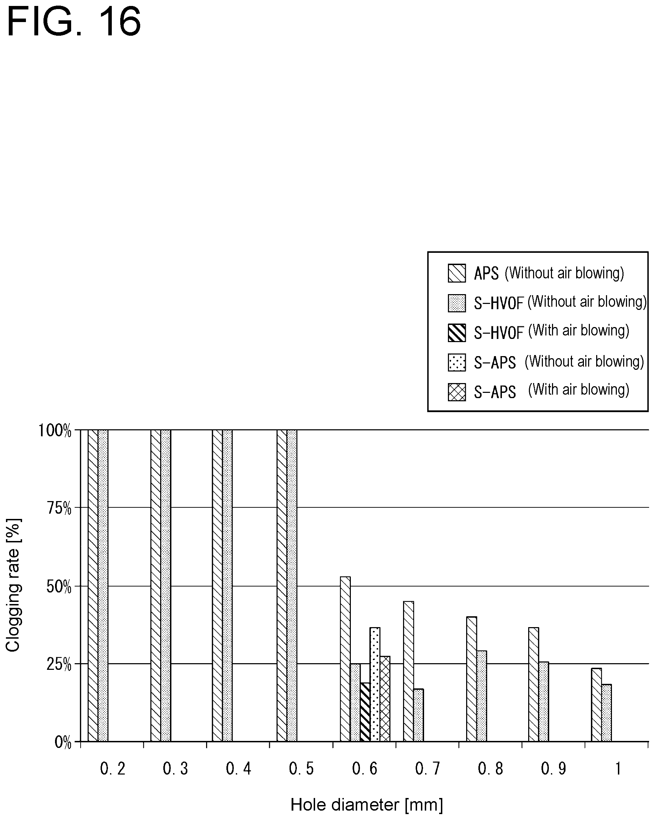

FIG. 16 is a graph showing experimental results regarding a relationship between a hole diameter (diameter) of the hole 110 and the clogging rate of the hole 110 with the thermal spray material.

The results shown in FIG. 16 show that the clogging rate of the hole 110 due to the difference in thermal spraying method or the presence/absence of the gas (air) ejected from the hole 110, when the inclination angle θb of the hole 110 is 30 degrees and the application angle θa of the hole 110 is 60 degrees.

In the experiment whose results are shown in FIG. 16, the bond coat layer 7 and the top coat layer 9 were formed in order on the surface of the heat-resistant alloy test piece corresponding to the above-described heat-resistant alloy base material 5. In the experiment whose results are shown in FIG. 16, the top coat layer 9 was formed by suspension high velocity flame spraying, by setting a target value of the film thickness to be the same as the film thickness in the actual device.

The clogging rate on the vertical axis of the graph shown in FIG. 16 is the percentage of a value obtained by dividing a hole diameter Da of the hole 110 after the formation of the top coat layer 9 by a hole diameter Db of the hole 110 after the formation of the bond coat layer 7 and subtracting from 1 (1-(Da/Db)) ({1-(Da/Db)}×100). The hole diameter Db of the hole 110 after the formation of the bond coat layer 7 tends to be smaller than the hole diameter of the hole 110 before the formation of the bond coat layer 7, since a part of the hole 110 is clogged with the thermal spray material of the bond coat layer 7.

The hole diameter on the horizontal axis of the graph shown in FIG. 16 is the hole diameter of the hole 110 before the formation of the bond coat layer 7.

As shown in FIG. 16, in the case where thermal spraying is performed without ejecting air from the hole 110, although the clogging rate is 100% if the hole diameter of the hole 110 is not greater than 0.5 mm, the clogging rate falls below approximately 50% if the hole diameter of the hole 110 is greater than 0.5 mm (for example, not less than 0.533 mm).

Further, as shown in FIG. 16, in the case where thermal spraying is performed without ejecting air from the hole 110, the clogging rate is lower in the case where the top coat layer 9 is formed by suspension atmospheric plasma spraying than in the case where the top coat layer 9 is formed by atmospheric plasma spraying. As shown in FIG. 16, in the case where thermal spraying is performed without ejecting air from the hole 110, the clogging rate is lower in the case where the top coat layer 9 is formed by suspension high velocity flame spraying than in the case where the top coat layer 9 is formed by suspension atmospheric plasma spraying.

As shown in FIG. 16, in the case where the top coat layer 9 is formed by suspension atmospheric plasma spraying and the case where the top coat layer 9 is formed by suspension high velocity flame spraying, the clogging rate is lower in the case where thermal spraying is performed while ejecting air from the hole 110 than in the case where thermal spraying is performed without ejecting air from the hole 110.

The present disclosure is not limited to the above-described embodiments, and also includes an embodiment obtained by modifying the above-described embodiments or an embodiment obtained by combining these embodiments as appropriate.

The contents described in the above embodiments would be understood as follows, for instance.
(1) A method for applying a thermal barrier coating according to at least one embodiment of the present disclosure includes: a step (S20) of forming a top coat layer 9 on a bond coat layer 7, which is formed on a heat-resistant alloy base material 5, by thermal spraying, while ejecting a gas from a plurality of holes 110 opened in a surface 5a of the heat-resistant alloy base material 5.

With the above method (1), by forming the top coat layer 9 while ejecting the gas from the plurality of holes 110, the entry of the material of the top coat layer 9 into the plurality of holes 110 is suppressed. Thus, in the step (S20) of forming the top coat layer 9 by thermal spraying, it is possible to suppress the clogging of the plurality of holes 110 with the material of the top coat layer 9.

Further, in the step (S20) of forming the top coat layer 9 by thermal spraying, in case disadvantage may be caused due to the excessive increase in temperature of the top coat layer 9 by thermal spraying, it is possible to suppress the excessive increase in temperature of the top coat layer 9 by ejecting the gas from the plurality of holes 110.

(2) In some embodiments, in the above method (1), the step (S20) of forming the top coat layer 9 by thermal spraying may include ejecting the gas from the above-described plurality of holes 110 by injecting the gas to a surface opposite to the above-described surface 5a of the heat-resistant alloy base material 5.

With the above method (2), if one end of each of the above-described plurality of holes 110 is open in the above-described surface 5a of the heat-resistant alloy base material 5 and another end is open in the above-described opposite surface, it is possible to easily eject the gas from the above-described plurality of holes 110.

(3) In some embodiments, in the above method (1), the step (S20) of forming the top coat layer 9 by thermal spraying may include ejecting the gas from the above-described plurality of holes 110 by supplying the gas to a passage 120 communicating with the above-described plurality of holes 110.

With the above method (3), by supplying the gas to the above-described passage 120, it is possible to easily eject the gas from the above-described plurality of holes 110.

(4) In some embodiments, in any one of the above methods (1) to (3), the step (S20) of forming the top coat layer 9 by thermal spraying preferably includes performing thermal spraying by setting an angular difference (application angle θa) between an extension direction of the above-described holes 110 and an injection direction of a thermal spray material at not less than 0 degrees and not greater than 80 degrees.

As a result of intensive studies by the present inventors, it was found that in order to suppress the clogging of the holes 110 with the material of the top coat layer 9, thermal spraying is more preferably performed by setting the angular difference (application angle θa) between the extension direction of the above-described holes 110 and the injection direction of the thermal spray material at not less than 0 degrees and not greater than 80 degrees.

With the above method (4), it is possible to effectively suppress the clogging of the holes 110 with the material of the top coat layer 9.

(5) In some embodiments, in any one of the above methods (1) to (4), each of the above-described holes 110 preferably has a diameter greater than 0.5 mm (for example, not less than 0.533 mm).

As a result of intensive studies by the present inventors, it was found that in order to suppress the clogging of the hole 110 with the material of the top coat layer 9, the diameter of the above-described hole 110 is more preferably greater than 0.5 mm (for example, not less than 0.533 mm).

With the above method (5), it is possible to effectively suppress the clogging of the holes 110 with the material of the top coat layer 9.

(6) In some embodiments, in any one of the above methods (1) to (5), the step (S20) of forming the top coat layer 9 by thermal spraying may include forming the top coat layer 9 by thermal-spraying a suspension containing ceramic powder by high velocity flame spraying.

With the above method (6), the top coat layer 9 can be formed at a lower running cost and in a shorter time than in the case where the top coat layer 9 is formed on the bond coat layer 7 by electron beam physical vapor deposition. Further, with the above method (6), it is also possible to greatly reduce an introduction cost of equipment for forming the top coat layer 9.

(7) In some embodiments, any one of the above methods (1) to (6) may further include: a step (S10) of forming the bond coat layer 7 on the heat-resistant alloy base material 5 by thermal spraying, while ejecting the gas from the above-described plurality of holes 110.

With the above method (7), by forming the bond coat layer 7 while ejecting the gas from the plurality of holes 110, the entry of the material of the bond coat layer 7 into the plurality of holes 110 is suppressed. Thus, in the step of forming the bond coat layer 7 by thermal spraying, it is possible to suppress the clogging of the plurality of holes 110 with the material of the bond coat layer 7.

(8) In some embodiments, in the above method (7), the step (S10) of forming the bond coat layer 7 by thermal spraying may include forming the bond coat layer 7 on the heat-resistant alloy base material 5 by high velocity flame spraying.

With the above method (8), the bond coat layer 7 can be formed by high velocity flame spraying, while suppressing the clogging of the plurality of holes 110 with the material of the bond coat layer 7.

(9) A heat-resistant member 1 according to at least one embodiment of the present disclosure includes the top coat layer 9 formed by the method for applying the thermal barrier coating according to any one of the above methods (1) to (8).

With the above configuration (9), since the clogging of the plurality of holes 110 with the material of the top coat layer 9 is suppressed, it is possible to enhance the reliability of cooling the heat-resistant member 1 by film cooling.

### Reference Signs List

- 1: Heat-resistant member
- 3: Thermal barrier coating
- 5: Heat-resistant alloy base material (base material)
- 7: Metal bond layer (bond coat layer)
- 9: Top coat layer
- 20: Thermal spray booth
- 30: Thermal spray gun
- 50: Moving device
- 70: Dust collection hood
- 81: Cooling nozzle
- 93, 94: Jig

## Claims

1. A method for applying a thermal barrier coating, comprising:
a step of forming a top coat layer on a bond coat layer, which is formed on a heat-resistant alloy base material, by thermal spraying, while ejecting a gas from a plurality of holes opened in a surface of the heat-resistant alloy base material.

2. The method for applying the thermal barrier coating according to claim 1,
wherein the step of forming the top coat layer by thermal spraying includes ejecting the gas from the plurality of holes by injecting the gas to a surface opposite to the surface of the heat-resistant alloy base material.

3. The method for applying the thermal barrier coating according to claim 1,
wherein the step of forming the top coat layer by thermal spraying includes ejecting the gas from the plurality of holes by supplying the gas to a passage communicating with the plurality of holes.

4. The method for applying the thermal barrier coating according to any one of claims 1 to 3,
wherein the step of forming the top coat layer by thermal spraying includes performing thermal spraying by setting an angular difference between an extension direction of the holes and an injection direction of a thermal spray material at not less than 0 degrees and not greater than 80 degrees.

5. The method for applying the thermal barrier coating according to any one of claims 1 to 4,
wherein each of the holes has a diameter greater than 0.5 mm.

6. The method for applying the thermal barrier coating according to any one of claims 1 to 5,
wherein the step of forming the top coat layer by thermal spraying includes forming the top coat layer by thermal-spraying a suspension containing ceramic powder by high velocity flame spraying.

7. The method for applying the thermal barrier coating according to any one of claims 1 to 6, further comprising:
a step of forming the bond coat layer on the heat-resistant alloy base material by thermal spraying, while ejecting the gas from the plurality of holes.

8. The method for applying the thermal barrier coating according to claim 7,
wherein the step of forming the bond coat layer by thermal spraying includes forming the bond coat layer on the heat-resistant alloy base material by high velocity flame spraying.

9. A heat-resistant member comprising the top coat layer formed by the method for applying the thermal barrier coating according to any one of claims 1 to 8.
